Europäisches Patentamt

European Patent Office

Office européen des brevets

(19)

(11) Veröffentlichungsnummer : **0 133 325**
**B1**

(12) **EUROPÄISCHE PATENTSCHRIFT**

(45) Veröffentlichungstag der Patentschrift :
12.11.86

(51) Int. Cl.⁴ : **F 16 D   3/18**

(21) Anmeldenummer : 84109306.5

(22) Anmeldetag : 06.08.84

(54) Drehgelenkkupplung.

(30) Priorität : 08.08.83 DE 3328601

(43) Veröffentlichungstag der Anmeldung :
20.02.85 Patentblatt 85/08

(45) Bekanntmachung des Hinweises auf die Patenterteilung : 12.11.86 Patentblatt 86/46

(84) Benannte Vertragsstaaten :
AT BE CH DE FR GB IT LI LU NL SE

(56) Entgegenhaltungen :
DE-B- 1 142 473
DE-B- 1 302 725
FR-A- 2 257 691
US-A- 1 770 743
US-A- 2 842 945
US-A- 3 106 077
US-A- 3 357 209

(73) Patentinhaber : F. Tacke KG
Rodder Damm
D-4440 Rheine 1 (DE)

(72) Erfinder : Stotko, Hubert, Dr.
Devesburgstrasse 56
D-4440 Rheine 1 (DE)

(74) Vertreter : Wuesthoff, Franz, Dr.-Ing. et al
Patentanwälte Wuesthoff -v. Pechmann-Behrens-
Goetz Schweigerstrasse 2
D-8000 München 90 (DE)

## Beschreibung

Die Erfindung betrifft eine Drehgelenkkupplung, insbesondere an einer Gelenkwelle einer Exzenterschneckenmaschine, mit

— mindestens einer axialkraftübertragenden Kupplungspaarung, die eine Kugelschale mit einem größten und einem kleinsten tragenden Breitenkreis und ein darin gelagertes Kugelsegment aufweist,

— einer drehmomentübertragenden Kupplungspaarung mit einer achsnormalen Mittelebene, die den Mittelpunkt des Kugelsegments enthält,

— und einem Gehäuse, das die Kupplungspaarungen umschließt und axial beiderseits der bzw. jeder axialkraftübertragenden Kupplungspaarung ringförmige Hohlräume aufweist, die mindestens teilweise mit flüssigem Schmiermittel gefüllt sind.

Drehgelenkkupplungen dieser Gattung sind seit langem bekannt (DE-C-1 302 725) und in der Praxis bewährt, besonders in Exzenterschneckenpumpen und -motoren, bei denen zwei solche Drehgelenkkupplungen an je einem Ende einer Gelenkwelle angeordnet sind und zusammen mit dieser eine Antriebsverbindung zwischen einer ortsfest gelagerten Welle und einem exzentrisch umlaufenden, schneckenförmigen Rotor bilden. In solchen Drehgelenkkupplungen haben sich Bogenverzahnungen als drehmomentübertragende Kupplungspaarung besonders bewährt; an deren Stelle können aber auch andere formschlüssige Verbindungen, beispielsweise mit in Rillen laufenden Kugeln, verwendet werden.

Üblicherweise ist beiderseits der drehmomentübertragenden Kupplungspaarung je eine axialkraftübertragende Kupplungspaarung aus Kugelschale und Kugelsegment angeordnet; jede dieser Kupplungspaarungen hat bei einer der möglichen Drehrichtungen der Exzenterschneckenmaschine eine Axialkraft zu übertragen, die vom wirksamen Rotorquerschnitt und dem Druckgefälle zwischen Ein- und Auslaß der Maschine abhängt und vor allem bei mehrstufigen Maschinen eine erhebliche Größe erreichen kann. Wegen der exzentrischen Umlaufbewegung des Läufers führt jeder einzelne Punkt jedes der Kugelsegmente innerhalb der zugehörigen Kugelschale eine theoretisch kreisförmige Bewegung aus, die infolge von Kippbewegungen des Rotors ellipsenförmig verzerrt sein kann.

Um bei solchen Bewegungen den Verschleiß an Kugelsegmenten und -schalen gering zu halten, ist eine gründliche Schmierung erforderlich. Deshalb ist in den bekannten gattungsgemäßen Drehgelenkkupplungen beiderseits jeder Kugelschale ein ringförmiger Hohlraum vorgesehen, der im wesentlichen mit Schmiermittel gefüllt ist. Man hat es bisher für ausreichend angesehen, daß aus diesen Hohlräumen bei den beschriebenen Relativbewegungen Schmiermittel in die Spalte zwischen den Kugelsegmenten und zugehörigen Kugelschalen eingeschleppt wird.

Die Lebensdauer bekannter gattungsgemäßer Drehgelenkkupplungen, besonders bei deren Einsatz in Exzenterschneckenmaschinen mit hohem Druckgefälle, ist erfahrungsgemäß vorwiegend durch Verschleiß der axialkraftübertragenden Kupplungspaarungen und weniger der drehmomentübertragenden Kupplungspaarung begrenzt. Man war deshalb bisher gezwungen, solche Drehgelenkkupplungen entweder von Zeit zu Zeit auszuwechseln oder ihren Kugeldurchmesser wegen der zu übertragenden Axialkraft größer zu gestalten als dies im Hinblick auf das zu übertragende Drehmoment erforderlich wäre.

Der Erfindung liegt deshalb die Aufgabe zugrunde, die Lebensdauer der axialkraftübertragenden Kupplungspaarungen durch verbesserte Schmierung zu erhöhen.

Die Aufgabe ist bei einer Drehgelenkkupplung der eingangs beschriebenen Gattung erfindungsgemäß dadurch gelöst, daß

— der zwischen der drehmomentübertragenden Kupplungspaarung und der oder jeder axialkraftübertragenden Kupplungspaarung angeordnete Schmiermittelraum durch einen zusätzlichen, ringförmigen Schmiermittelraum radial nach innen erweitert ist,

— der zusätzliche ringförmige Schmiermittelraum einen Innendurchmesser hat, der höchstens ebenso groß wie der Durchmesser des kleinsten tragenden Breitenkreises des Kugelsegments ist, und

— der zusätzliche ringförmige Schmiermittelraum axial nach außen durch eine Basis des zugehörigen Kugelsegments begrenzt ist, die von der achsnormalen Mittelebene einen Abstand hat, welcher mindestens halb so groß wie der Radius des Kugelsegments ist.

Es hat sich überraschenderweise gezeigt, daß aus dem zusätzlichen Schmiermittelraum erheblich mehr Schmiermittel in den Spalt zwischen Kugelschale und Kugelsegment eingeschleppt wird als aus den bisher schon beiderseits dieses Spalts vorhandenen, mindestens teilweise mit Schmiermittel gefüllten Hohlräumen. Infolge der erfindungsgemäß verbesserten Schmierung läßt sich die Lebensdauer der axialkraftübertragenden Kupplungspaarungen mit den bisher schon verwendeten Werkstoffen der Kugelschale und des Kugelsegments und bei unveränderten oder sogar verminderten Gesamtabmessungen dieser Bauteile wesentlich erhöhen.

Die Erfindung ist vorzugsweise auf solche bekannten Drehgelenkkupplungen anwendbar, bei denen zwei Kugelsegmente, die zu je einer axialkraftübertragenden Kupplungspaarung gehören, und eine zwischen diesen angeordnete Außenverzahnung, die zur drehmomentübertragenden Kupplungspaarung gehört, an einer gemeinsamen Nabe ausgebildet sind. In diesem Fall wird die Erfindung zweckmäßigerweise derart ausgeführt, daß die Nabe beiderseits der Außenverzahnung je einen ringförmigen Einstich als zusätzlichen Schmiermittelraum aufweist.

Ausführungsbeispiele der Erfindung werden im folgenden anhand schematischer Zeichnungen mit weiteren Einzelheiten erläutert. Es zeigen, jeweils in einem axialen Schnitt,

Figur 1 eine Drehgelenkkupplung in einer Exzenter schneckenpumpe und

Figur 2 eine abgewandelte Drehgelenkkupplung.

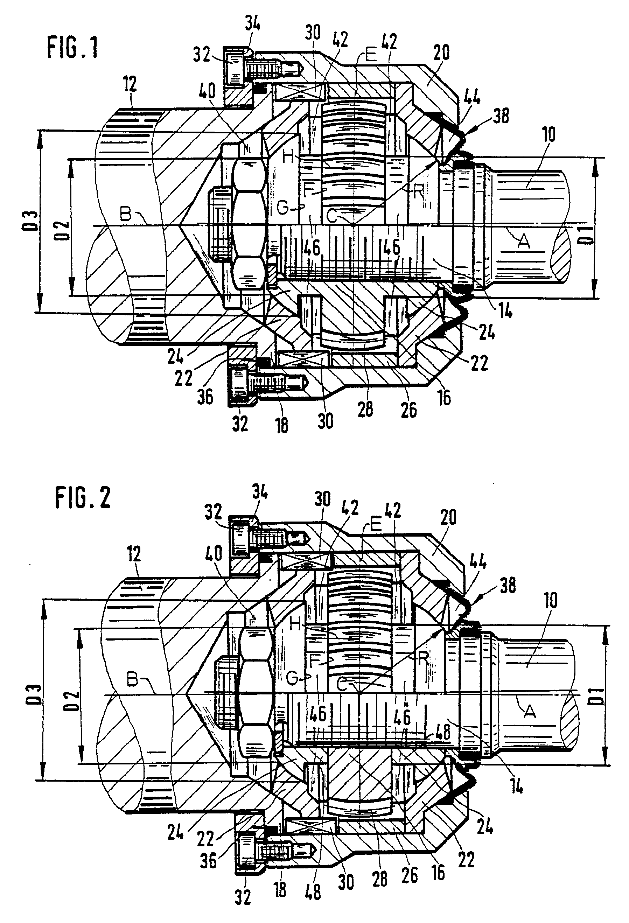

Die in Fig. 1 dargestellte Drehgelenkkupplung verbindet ein Ende einer Gelenkwelle 10 mit einem Ende eines schneckenförmigen Rotors 12 einer Exzenterschneckenpumpe. Die Gelenkwelle 10 ist an ihrem anderen, nicht dargestellten Ende durch eine zweite, im wesentlichen gleiche Drehgelenkkupplung mit einer ortsfest gelagerten Antriebswelle verbunden. An dem dargestellten Ende der Gelenkwelle 10 ist ein Zapfen 14 mit Vielnutprofil ausgebildet, auf dem eine im wesentlichen kugelförmige Nabe 16 befestigt ist. Am Ende des Rotors 12 ist ein Bund 18 ausgebildet, an dem ein Gehäuse 20 befestigt ist. Die geometrischen Achsen A und B der Gelenkwelle 10 und des Rotors 12 schneiden sich in einem Punkt C, der den Mittelpunkt der gesamten Drehgelenkkupplung bildet. Durch den Mittelpunkt C erstreckt sich eine zur Achse A normale Mittelebene E.

Innerhalb des Gehäuses 20 sind zwei Kugelschalen 22 in bezug auf den Rotor 12 zentriert angeordnet. Die beiden Kugelschalen 22 bilden zusammen mit je einem an der Nabe 16 ausgebildeten Kugelsegment 24 je eine axialkraftübertragende Kupplungspaarung 22, 24. Die aneinanderliegenden Flächen der Kugelschalen 22 und Kugelsegmente 24 sind Gleitflächen mit dem Radius R und Mittelpunkt C. Zwischen den beiden Kugelschalen 22 ist im Gehäuse 20 ein innenverzahnter Ring 26 zentriert und befestigt, der zusammen mit einer an der Nabe 16 zwischen den beiden Kugelsegmenten 24 ausgebildeten Außenverzahnung 28 eine drehmomentübertragende Kupplungspaarung 26, 28 bildet. Die Kupplungspaarung 26, 28 ist in bezug zur Mittelebene E symmetrisch.

Relativdrehungen zwischen dem Gehäuse 20, den Kugelschalen 22 und dem innenverzahnten Ring 26 sind durch in gleichmäßigen Umfangsabständen im Gehäuse 20 angeordnete Paßfedern 30 verhindert. Die gesamte Drehgelenkkupplung ist in axialer Richtung durch Schrauben 32 zusammengehalten, mit denen ein Ring 34, der den Bund 18 übergreift, am Gehäuse 20 befestigt ist. Zwischen dem Ring 34 und dem Bund 18 ist eine Ringdichtung 36 eingespannt ; auf der anderen, in Fig. 1 rechten Seite der Drehgelenkkupplung dichtet eine Manschettendichtung 38 das Gehäuse 20 gegen die Gelenkwelle 10 ab.

Innerhalb des Gehäuses 20 ist zwischen dem Rotor 12 einerseits und der Nabe 16 sowie der in Fig. 1 linken Kugelschale 22 andererseits ein erster ringförmiger Hohlraum 40 ausgebildet, der teilweise mit Schmiermittel gefüllt ist. Ein zweiter, vollständig mit Schmiermittel gefüllter Hohlraum 42 ist rings um den mittleren Bereich der Nabe 16 innerhalb des innenverzahnten Rings 26 ausgebildet. Ferner ist zwischen der Nabe 16 sowie der in Fig. 1 rechten Kugelschale 22 einerseits und der Manschettendichtung 38 andererseits ein ringförmiger Hohlraum 44 ausgebildet, der ebenfalls im wesentlichen mit Schmiermittel gefüllt ist. Insoweit entspricht die in Fig. 1 dargestellte Drehgelenkkupplung im wesentlichen dem vorausgesetzten Stand der Technik.

Zusätzlich zu den beschriebenen Hohlräumen 40, 42 und 44 ist zwischen jeder der beiden axialkraftübertragenden Kupplungspaarungen 22, 24 und der drehmomentübertragenden Kupplungspaarung 26, 28 ein ringförmiger Schmiermittelraum 46 angeordnet. Jeder dieser zusätzlichen Schmiermittelräume 46 hat einen Innendurchmesser D1, der etwas kleiner ist als der Durchmesser D2 des kleinsten tragenden Basiskreises und dementsprechend erheblich kleiner als der Durchmesser D3 des größten tragenden Basiskreises der zugehörigen Kugelschale 22. Seitlich, d. h. in axialer Richtung, ist jeder der beiden Schmiermittelräume 46 begrenzt durch eine Stirnfläche F, in der die Außenverzahnung 28 endet, und eine Basis G, in der das zugehörige Kugelsegment 24 beginnt. Die Basis G hat von der Mittelebene E einen Abstand H, deretwas größer als halb so groß wie der Radius R ist.

Gemäß Fig. 1 ist die Nabe 16 mit ihren beiden Kugelsegmenten 24 und ihrer Außenverzahnung 28 einstückig ausgebildet. Die beiden zusätzlichen Schmiermittelräume 46 sind von je einem ringförmigen Einstich in der Nabe 16 gebildet.

Die Drehgelenkkupplung gemäß Fig. 2 unterscheidet sich von der in Fig. 1 dargestellten im wesentlichen dadurch, daß die beiden Kugelsegmente 24 als gesonderte Bauteile ausgebildet und über je einen ringförmigen Ansatz 48 mit Außendurchmesser D1 an der Nabe 16 abgestützt sind.

**Patentansprüche**

1. Drehgelenkkupplung, insbesondere an einer Gelenkwelle einer Exzenterschneckenmaschine, mit

— mindestens einer axialkraftübertragenden Kupplungspaarung (22, 24), die eine Kugelschale (22) mit einem größten und einem kleinsten tragenden Breitenkreis und ein darin gelagertes Kugelsegment (24) aufweist,

— einer drehmomentübertragenden Kupplungspaarung (26, 28) mit einer achsnormalen Mittelebene (E), die den Mittelpunkt (C) des Kugelsegments (24) enthält,

— und einem Gehäuse (20), das die Kupplungspaarungen (22, 24 ; 26, 28) umschließt und axial beiderseits der bzw. jeder axialkraftübertragenden Kupplungspaarung (22, 24) ringförmige Hohlräume (40, 42, 44) aufweist, die mindestens teilweise mit flüssigem Schmiermittel gefüllt sind, dadurch gekennzeichnet, daß

— der zwischen der drehmomentübertragenden Kupplungspaarung (26, 28) und der oder jeder axialkraftübertragenden Kupplungspaarung (22, 24) angeordnete Schmiermittelraum (42) durch einen zusätzlichen ringförmigen Schmiermittelraum (46) radial nach innen erweitert ist,

— der zusätzliche ringförmige Schmiermittelraum (46) einen Innendurchmesser (D1) hat, der höchstens ebenso groß wie der Durchmesser (D2) des kleinsten tragenden Breitenkreises des Kugelsegments (24) ist, und

— der zusätzliche ringförmige Schmiermittelraum (46) axial nach außen durch eine Basis (G) des zugehörigen Kugelsegments (24) begrenzt ist, die von der achsnormalen Mittelebene (E) einen Abstand (H) hat, welcher mindestens halb so groß wie der Radius (R) des Kugelsegments (24) ist.

2. Drehgelenkkupplung nach Anspruch 1, bei der zwei Kugelsegmente (24), die zu je einer axialkraftübertragenden Kupplungspaarung (22, 24) gehören, und eine zwischen diesen angeordnete Außenverzahnung (28), die zur drehmomentübertragenden Kupplungspaarung (26, 28) gehört, an einer gemeinsamen Nabe (16) ausgebildet sind, dadurch gekennzeichnet, daß die Nabe (16) beiderseits der Außenverzahnung (28) je einen ringförmigen Einstich als zusätzlichen Schmiermittelraum (46) aufweist.

## Claims

1. A rotary universal joint, especially on a cardan shaft of an eccentric worm machine, comprising

— at least one pair of joints (22, 24) transmitting axial forces, which includes a socket (22) having a largest and a smallest supporting parallel of latitude, and a spherical segment (24) supported therein,

— a torque-transmitting pair of joints (26, 28) with a central plane (E) which extends perpendicular to the axis and contains the center (C) of the spherical segment (24),

— and a housing (20) which surrounds the pairs of joints (22, 24 ; 26, 28) and comprises annular cavities (40, 42, 44) axially at both sides of the or each pair of joints (22, 24) transmitting axial forces which cavities are filled at least in part with liquid lubricant,
characterized in that

— the lubricant-containing cavity (42) arranged intermediate the pair of joints (26, 28) transmitting the torque and the or each pair of joints (22, 24) transmitting axial forces is extended radially inwardly by an additional annular lubricant-containing space (46),

— the additional annular lubricant-containing space (46) has an internal diameter (D1) which is, at most, as great as the diameter (D2) of the smallest supporting parallel of latitude of the spherical segment (24), and

— the additional annular lubricant-containing space (46) is limited axially outwardly by a base (G) of the associated spherical segment (24) which base is located at a distance (H) from the center plane (E) perpendicular to the axis that is at least half as great as the radius (R) of the spherical segment (24).

2. The rotary universal joint as claimed in claim 1, in which two spherical segments (24) each belonging to a pair of joints (22, 24) transmitting axial forces, and an external toothing (28) arranged therebetween and belonging to the pair of joints (26, 28) transmitting the torque are formed on a common hub (16), characterized in that at either side of the external toothing (28) the hub (16) is provided with an annular recess each serving as additional lubricant-containing space (46).

## Revendications

1. Joint articulé tournant, en particulier sur un arbre articulé d'une machine à vis sans fin à excentrique, comportant

— au moins une paire (22, 24) d'accouplements qui transmet la force axiale et qui présente une coque sphérique (22), avec un plus petit cercle parallèle porteur et un plus grand cercle parallèle porteur, et un segment sphérique (24) qui porte sur elle,

— une paire (26, 28) d'accouplements qui transmet le moment de rotation, avec un plan médian (E) normal à l'axe et contenant le centre (C) du segment sphérique (24),

— et un carter (20) qui enclôt les paires d'accouplements (22, 24 ; 26, 28) et présente, des deux côtés, par rapport à l'axe, de la paire ou de chaque paire (22, 24) d'accouplements qui transmet la force axiale, des chambres annulaires (40, 42, 44) qui sont au moins partiellement remplies d'un lubrifiant liquide,
caractérisé

— en ce que la chambre de lubrifiant (42) disposée entre la paire (26, 28) d'accouplements qui transmet le moment de rotation et la ou chaque paire (22, 24) d'accouplements qui transmet la force axiale est prolongée radialement vers l'intérieur par une chambre annulaire supplémentaire de lubrifiant (46),

— en ce que la chambre annulaire supplémentaire de lubrifiant (46) a un diamètre intérieur (D1) qui est au maximum aussi grand que le diamètre (D2) du plus petit cercle parallèle porteur du segment sphérique (24), et

— en ce que la chambre annulaire supplémentaire de lubrifiant (46) est limitée axialement vers l'extérieur par une base (G) du segment sphérique correspondant (24) qui se trouve à une distance (H), du plan médian (E) normal à l'axe, qui est au moins égale à la moitié du rayon (R) du segment sphérique (24).

2. Joint articulé tournant selon la revendication 1, dans lequel sont prévus sur un moyeu commun (16) deux segments sphériques (24) qui appartiennent respectivement à une paire (22, 24) d'accouplements qui transmet la force axiale à une denture extérieure (28) qui est disposée entre ces segments et qui appartient à la paire (26, 28) d'accouplements qui transmet le moment de rotation, caractérisé en ce que le moyeu (16) présente respectivement des deux côtés de la denture extérieure (28) une rainure annulaire formant chambre supplémentaire de lubrifiant (46).

**FIG.1**